# EUROPÄISCHE PATENTSCHRIFT

(11) **EP 1 389 039 B1**
(45) Veröffentlichungstag und Bekanntmachung des Hinweises auf die Patenterteilung: **12.11.2008**
(21) Anmeldenummer: 02738019.5
(22) Anmeldetag: 02.05.2002
(51) Int. Cl.: A01N 25/00

(54) **VERFAHREN ZUR BEKÄMPFUNG VON SCHADNAGERN AUF LANDWIRTSCHAFTLICHEN BETRIEBEN**
METHOD FOR CONTROLLING HARMFUL RODENTS IN AGRICULTURAL ENTERPRISES
PROCEDE POUR LUTTER CONTRE DES RONGEURS NUISIBLES DANS DES EXPLOITATIONS AGRICOLES

(30) Priorität: 14.05.2001 DE 10123415
(43) Veröffentlichungstag der Anmeldung: 18.02.2004
(73) Patentinhaber: Bayer CropScience AG, 40789 Monheim (DE)
(72) Erfinder: ENDEPOLS, Stefan, 51065 Köln (DE); ZIEBELL, Karl-Ludwig, 40593 Düsseldorf (DE); KLEMANN, Nicole, 48231 Warendorf (DE)
(86) Internationale Anmeldenummer: PCT/EP2002/004787
(87) Internationale Veröffentlichungsnummer: WO 2002/091827

(56) Entgegenhaltungen:
- F.STEINIGER: "Rattenbiologie und Rattenbekämpfung" 1952 , FERDINAND ENKE VERLAG , STUTTGART, DE XP002215441 "Gesichtspunkte für den Schädlingsbekämpfer bei der öffentlichen Rattenbekämpfung", Seiten 135-136 Seite 135, Absatz 1
- "The Norway Rat, Rattus norvegicus" PEST INFORMATION, [Online] 2000, XP002215435 Gefunden im Internet: <URL:http://www.bugsmart.com/index.mv?parm _func=PI_NorwayRat> [gefunden am 2002-10-01]
- A.KUNCHITZKI ET AL.: "Die Hausratte (Rattus rattus)" HAUSRATTE, [Online] 1996, XP002215436 Gefunden im Internet: <URL:http://homepages.fbmev.de/bm886695/an di/ratte1.htm> [gefunden am 2002-10-01]
- M.DERZ: "Echte Mäuse" ECHTE MÄUSE, [Online] Dezember 2000 (2000-12), XP002215437 Gefunden im Internet: <URL:http://www.das-tierlexikon.de/echte_m aeuse.htm> [gefunden am 2002-10-01]
- ENTOMOLOGISTS AT THE ILLINOIS DEPARTMENT OF PUBLIC HEALTH, UNIVERSITY OF ILLINOIS, ILLINOIS NATURAL HISTORY SURVEY, AND PURDUE U.: "Rat Management" RAT MANAGEMENT, [Online] 1996, XP002215438 Gefunden im Internet: <URL:http://www.cdphe.state.co.us/cp/Vecto r/Rodents/ZRAT2.html> [gefunden am 2002-10-01]
- "Wanderatte" WANDERATTE, [Online] 6. September 1998 (1998-09-06), XP002215439 Gefunden im Internet: <URL:http://www.ratz.url.ch/wanderatte.htm > [gefunden am 2002-10-01]
- DATABASE CAB [Online] CAB INTERNATIONAL, WALLINGFORD, OXON, GB; J.H.GREAVES ET AL.: "An investigation of the parameters of anticoagulant treatment efficiency" retrieved from STN-INTERNATIONAL Database accession no. 89:35869 CABI XP002215442 & EPPO BULETIN, Bd. 18, Nr. 2, 1988, Seiten 211-221,
- "PRESSEINFORMATION: Auf die richtige Methode kommt es an: "Rattenfrei" mit BayTool" BAYTOOL, [Online] 16. Oktober 2001 (2001-10-16), XP002215440 Gefunden im Internet: <URL:http://www.infofarm.de/doc/ratten/rat te-pres-2.html> [gefunden am 2002-10-01]
- DATABASE CAB [Online] CAB INTERNATIONAL, WALLINGFORD, OXON, GB; R.MOENS: "Strategies for controlling the brown rat, Rattus norvegicus Berkenhout" retrieved from 90:141023 CABA XP002215443 & PARASITICA, Bd. 44, Nr. 3-4, 1988, Seiten 127-140,
- DATABASE CAB [Online] CAB INTERNATIONAL, WALLINGFORD, OXON, GB; S.ENDEPOLS ET AL.: "Rat control at a modern darm with Racumin tracking powder - a field trial" retrieved from 1998:163784 CABA XP002215444 & ZHONGGUO MEIJIESHENGWUXUE JI KONGZHI ZAZHI, Bd. 8, Nr. 6, 1997, Seiten 409-412,

## Beschreibung

Die vorliegende Erfindung betrifft ein Verfahren zur Bekämpfung von Schadnagern mit Rodentiziden auf landwirtschaftlichen Betrieben.

Schadnager wie Ratten stellen ein erhebliches seuchenhygienisches Problem, insbesondere in der Tierhaltung dar. Sie können Reservoir oder Vektor für zahlreiche Erreger sein, z. B. für Erkrankungen wie Enteritiden, Rotlauf, Dysenterie, Maul- und -Klauenseuche und andere. Die nachhaltige Bekämpfung von Ratten ist deshalb wichtiger Bestandteil der landwirtschaftlichen Betriebshygiene, insbesondere auf tierhaltenden Betrieben.

Aus epidemiologischen Gründen werden in der Landwirtschaft tendenziell weniger Schädlingsbekämpfer mit der Vektorkontrolle beauftragt. Landwirte nehmen die Schädlingsbekämpfung zunehmend in die eigene Hand. Sowohl in mittelständischen Betrieben als auch in großen Integrationen werden Schadnager vom Landwirt oder angestelltem Personal mit handelsüblichen Rodentiziden bekämpft.

Rodentizide (insbesondere Rattenbekämpfungsmittel) können käuflich im Landhandel oder bei anderen Anbietern erworben werden. Diese Mittel bestehen in der Regel aus Cerealien wie Weizen oder Haferflocken oder sie sind Mischungen, die auf Cerealien basieren, wie Pasten und Wachsblöcke. Häufigste darin verwendete Wirkstoffe sind Antikoagulantien. Vom Hersteller werden in der Regel auf der Packung oder in Broschüren Hinweise für die Verwendung dieser Mittel gegeben.

Diese Hinweise empfehlen als ersten Schritt einer Bekämpfung die Analyse des Befalls. Diese ist nicht durch Beobachtung der Ratten bzw. anderer Schadnager möglich, weil die Tiere überwiegend nachtaktiv sind und versteckt leben. Deshalb wird in den üblichen Hinweisen für Anwender, aber auch in Broschüren und Veröffentlichungen empfohlen, nach Spuren der Aktivität von Schadnagern zu suchen. Als solche werden u. a. Kot, abgelaufene Stellen, Nagespuren oder Verwühlungen im Erdreich beschrieben. An den erkannten Stellen ist der Köder zu plazieren.

Obwohl diese Hinweise und Empfehlungen hinreichend bekannt und Köder mit guter Wirksamkeit verfügbar sind, kann die Schadnagerbekämpfung in der Tierhaltung oft nicht mit befriedigendem Ergebnis abgeschlossen werden. Offensichtlich frisst ein Teil der Schadnager nicht oder zu wenig vom Köder und überlebt die Bekämpfung.

Vorausgesetzt, es wurden Köder mit hinreichenden Eigenschaften verwendet, ist das häufige Ausbleiben von Tilgung oder weitgehender Reduzierung des Befalls nur dadurch zu erklären, dass der Köder nicht so auf dem befallenen Areal ausgebracht wurde, dass ihn alle Schadnager des oder der zu bekämpfenden Rudel erreichen und folglich verzehren können. Das übliche Verfahren, über indirekte Zeichen des Vorkommens von Schadnagern den gesamten Befall in Ausdehnung und Aktivitätsverteilung zu analysieren, führt häufig zu einem mangelhaften Ergebnis. Die Ausdehnung eines Befalls wird z. B. vom Landwirt in vielen Fällen unterschätzt, u. a. weil er nach Rattenspuren nur dort sucht, wo er selbst sich häufig aufhält.

Es bestand der Bedarf an einem Verfahren zur Schadnagerbekämpfung, das ohne spezielle Analyse des jeweiligen Schadnagerbefalls gute Erfolge bei der Schadnagerbekämpfung liefert.

Die vorliegende Erfindung betrifft nun ein Verfahren der Schadnagerbekämpfung auf landwirtschaftlichen Betrieben, das auf einem einfachen, mechanistischen Vorgehen beruht. Eine individuelle Analyse des jeweiligen Schadnagerbefalls ist nicht erforderlich. Die Köderstellen werden auf dem Betrieb nach einem Schlüssel der eindeutigen Zuordnung zu bestimmten, typischen Strukturelementen eingerichtet. Diese Strukturelemente sind auf allen landwirtschaftlichen Betrieben zu finden und dem Landwirt bekannt. Die Verteilung der Köderstellen basiert auf vorgegebenen, von den Schadnagern unabhängigen Informationen.

Gegenstand der Erfindung ist daher ein Verfahren zur Bekämpfung von Schadnagern auf landwirtschaftlichen Betrieben, bei dem
(i) in einem ersten Schritt festgestellt wird, welches der folgenden Strukturelemente auf dem betreffenden Betrieb vorhanden ist
   a) Gebäude
   b) Viehhaltung
   c) Futterlager
   d) Stapel
   e) Altmaterialhaufen
   f) Stroh/Heu
   g) Bodendecker
   h) Baue von Schadnagern
   und gegebenenfalls diese Strukturelemente auf einer Lageskizze des Betriebes dargestellt werden, beispielsweise in Form von Symbolen;
(ii) in einem zweiten Schritt jedem der so identifizierten Strukturelemente und nur diesen jeweils nur eine Köderstelle zugeordnet und mit rodentizidem Köder eingerichtet wird;
(iii) in einem dritten Schritt die Köderstellen regelmäßig kontrolliert und Köder die
   a) zu mindestens 50 % gefressen sind durch die doppelte Ködermenge ersetzt,
   b) zu weniger als 50 % gefressen sind durch die gleiche Ködermenge ersetzt,
   c) unberührt sind nach 2 Wochen auf die halbe Menge reduziert,
   d) verschmutzt oder anderweitig unbrauchbar sind durch neue Köder ersetzt.

An den vorhandenen Strukturelementen wird je eine Köderstelle nach den üblichen Prinzipien mit rodentiziden Fraßködern eingerichtet.

Befinden sich z.B. in einem Gebäude (a) ein Futterlager (c) und Viehhaltung (b), so sind insgesamt drei Köderstellen einzurichten.

In einer bevorzugten Ausführungsform können sehr nahe, d.h. wenige Meter (etwa bis zu 3 m) voneinander entfernte Köderstellen zusammengefasst werden.

Bevorzugt ist ein Verfahren, bei dem
(i) in einem ersten Schritt festgestellt wird, welches der folgenden Strukturelemente auf dem betreffenden Betrieb vorhanden ist
   a) Gebäude
   b) Viehhaltung
   c) Futterlager
   d) Stapel
   e) Altmaterialhaufen
   f) Stroh/Heu
   und gegebenenfalls diese Strukturelemente auf einer Lageskizze des Betriebes dargestellt werden, beispielsweise in Form von Symbolen;
(ii) in einem zweiten Schritt jedem der so identifizierten Strukturelemente und nur diesen jeweils nur eine Köderstelle zugeordnet und mit rodentizidem Köder eingerichtet wird;
(iii) in einem dritten Schritt die Köderstellen regelmäßig kontrolliert und Köder die
   a) zu mindestens 50 % gefressen sind durch die doppelte Ködermenge ersetzt,
   b) zu weniger als 50 % gefressen sind durch die gleiche Ködermenge ersetzt,
   c) unberührt sind nach 2 Wochen auf die halbe Menge reduziert,
   d) verschmutzt oder anderweitig unbrauchbar sind durch neue Köder ersetzt.

Strukturelemente bezeichnen den Lebensraum sowie das Aufenthalts- oder Rückzugsgebiet von Schadnagern. Dies sind insbesondere Gebäude, Viehhaltung, Futterlager, Stapel, Altmaterialhaufen, Stroh/Heu, Bodendecker, Gewässer und Baue von Schadnagern.

Köderstellen für Schadnager sind bevorzugt
- wandbündig und auf festem Untergrund (d.h. nicht wackelnd) eingerichtet;
- vor Wasser geschützt eingerichtet;
- abgedeckt, vorzugsweise mit altem Material, beispielsweise Holz, Dachpfannen, Rohre, Ziegel, Betonsteine, Reifen, Köderboxen;
- so groß, dass unter der Abdeckung genügend Bewegungsraum für Schadnager besteht, bei Ratten beispielsweise 25 cm;
- für Hunde, Vögel und andere Tiere unzugänglich.

Köderstellen für Schadnager werden bevorzugt so eingerichtet, dass deren Umgebung nur minimal verändert wird.

Landwirtschaftliche Betriebe sind Einrichtungen, die einen landwirtschaftlichen, forstwirtschaftlichen oder gartenbaulichen Charakter haben und/oder der Erzeugung, der Verarbeitung, der Lagerung, dem Verkauf landwirtschaftlicher Produkte, einschließlich Futtermitteln, dienen und/oder auf denen Viehhaltung erfolgt.

Bevorzugt sind landwirtschaftliche Betriebe, auf denen Viehhaltung im Haupterwerb, Nebenerwerb oder nicht erwerbsmäßig erfolgt.

Bevorzugt sind auch Betriebe, in denen sich Futtermittel befinden.

Gebäude sind vor allem Wohngebäude aber auch Lagerhallen, Stallgebäude, Werkstattgebäude, Schuppen, Garagen, Scheunen und dergleichen, wobei jedes Geschoss (Obergeschoss (c), Erdgeschoss, Untergeschoss (e)) einem Strukturelement entspricht.

Viehhaltung kann beispielsweise ein geschlossenes, halboffenes oder offenes Gebäude bzw. Gebäudebereich mit beispielsweise Pferde-, Ziegen, Rinder-, Schweine-, Schaf- oder Geflügelhaltung sein.

Futterlager sind beispielsweise: Futtersilo, Futtermischer, Getreidehaufen oder -silos, Getreidemischer, Wannen, in denen Futter gelagert wird, etc.

Stapel sind beispielsweise geordnete Holzstapel, Stapel von Baumaterial, Brennholz etc.

Altmaterialhaufen (Gerümpel) sind ungeordnete Haufen beispielsweise von Rohren, Reifen, altem Baumaterial etc..

Stroh/Heu bezeichnet beispielsweise Strohhaufen oder Heuhaufen, bestehend aus losem oder gebundenem Stroh oder Heu auch in Scheunen oder auf Tennen.

Baue von Schadnagern sind bereits bekannte Baue von Schadnagern, wie Ratten und Mäusen, insbesondere Ratten.

Bodendecker sind z.B. Gebüsche, die den Boden dicht bedecken und somit Schutz für Schadnager bieten. Bevorzugt werden Köderstellen bei solchen Bodendeckern ausgerichtet, die sich in unmittelbarer Nähe von Gebäuden und Tierställen befinden, besonders bevorzugt bei solchen, die nicht mehr als 10 m von Ställen oder Gebäuden mit Futtermittellagerung entfernt sind.

Schadnager sind kommensale Nager, insbesondere Ratten, wie die Wanderratte oder Mäuse. Das erfindungsgemäße Verfahren wird besonders bevorzugt zur Rattenbekämpfung eingesetzt.

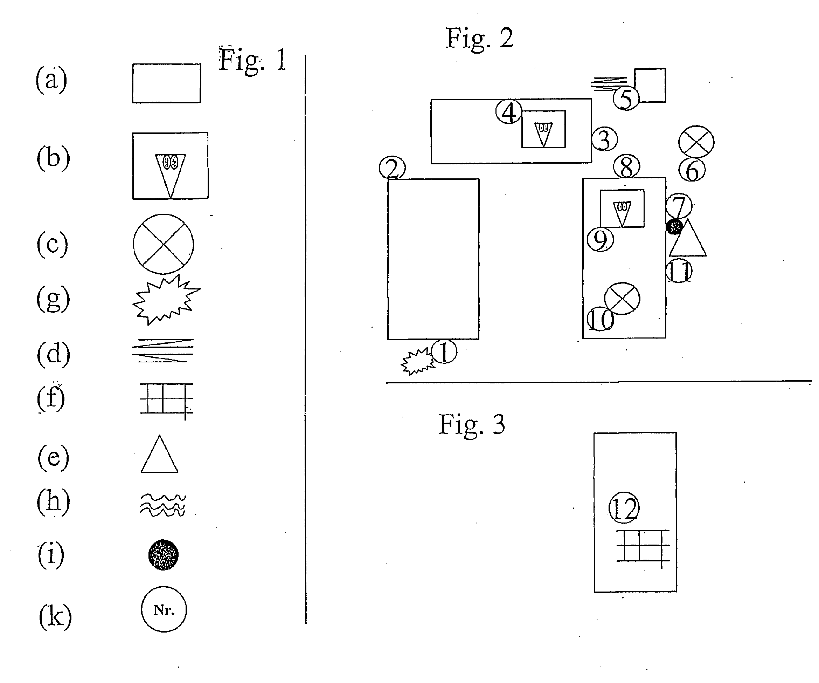

Hilfsmittel beim Aufbau der oben beschriebenen Köderverteilung kann eine Lageskizze sein (vgl. Fig. 1 bis 3), in der alle genannten Strukturelemente ((a) bis (h)) als Symbol verzeichnet werden. Diesen werden die durchnummerierten Köderstellen (k) zugeordnet. Auf einem Datenblatt werden die Köderstellen tabellarisch aufgelistet und die Menge der nach einem zeitlichen Plan aus- und nachgelegten Köder protokolliert.

Gemäß des erfinderischen Vefahrens werden die Köderstellen regelmäßig, bevorzugt alle 2 bis 7 Tage, besonders bevorzugt alle 3 bis 4 Tage kontrolliert.

Je nach Befund bei den einzelnen Köderstellen werden folgende Maßnahmen ergriffen:
• Köder zu mindestens 50 % gefressen: Eingesetzte Menge an Köder erhöhen, beispielsweise verdoppeln.
• Köder weniger als 50 % gefressen: Durch frischen Köder ersetzen.
• Köder unberührt: Nach 2 Wochen Ködermenge halbieren
• Köder verschmutzt oder anderweitig unbrauchbar geworden, durch neuen Köder ersetzen.

In einer bevorzugten Ausführungsform erfolgt die Bekämpfung der Schadnager in benachbarten Betrieben zur gleichen Zeit.

Überraschenderweise stellte sich bei der Prüfung des Verfahrens heraus, dass völlig auf die Analyse des jeweiligen Schadnagerbefalls verzichtet werden kann. Besonders erstaunlich ist, dass selbst hartnäckiger, versteckter Rattenbefall getilgt wurde, ohne vorherige Analyse des Befalls und ohne jede Abweichung vom erfindungsgemäßen Prinzip. Dadurch wird eine wesentliche Fehlerquelle bei der Schadnagerbekämpfung - die Unterschätzung des Befalls - in dem erfindungsgemäßen Vorgehen eliminiert. Bemerkenswert und für die Praxis überaus wertvoll ist, dass eine erfolgreiche Schadnagerbekämpfung möglich ist, die nur auf Daten der Verteilung bestimmter landwirtschaftlicher Strukturelemente, die vom Befall unabhängig sind, beruht.

Bei der Erprobung dieses Verfahrens stellte sich erstaunlicherweise heraus, dass selbst auf Betrieben, die über Jahre trotz ständiger Bekämpfung massive Rattenprobleme hatten, eine Tilgung des Befalls möglich war. Völlig unerwartet war dies sogar in einem Gebiet möglich, in dem die Anwendung antikoagulanter Köder wegen Resistenz aussichtslos erschien. Unerwartet ist dies in einem speziellen Fall besonders deswegen, weil ein Bekämpfungsmittel mit einem Antikoagulant der ersten Generation eingesetzt wurde, das nach vorherigen Erfahrungen als weitgehend unwirksam eingeschätzt wurde.

Ein weiterer Vorteil des beschriebenen Verfahrens ist, dass eine Durchführung auch möglich ist, wenn ein Betreten des Betriebes durch Sachkundige nicht möglich ist. Dies ist unter dem Aspekt der Notfallplanung im Seuchenfall von besonderer Bedeutung, da Fremdpersonen den Betrieb nicht betreten dürfen, eine effiziente Schadnagerbekämpfung dennoch notwendig ist.

Das erfindungsgemäße Verfahren der Rattenbekämpfung, beruht auf einem mechanistischen Vorgehen, das keine Analyse des Befalls, sondern nur Wissen über die Verteilung bestimmter Strukturelemente auf dem betreffenden Landwirtschaftsbetrieb erfordert.

Je Strukturelement wird eine Köderstelle eingerichtet, gegebenenfalls können auch nahe beieinander liegende Köderstellen (nicht mehr als 3 m voneinander entfernt) zusammengelegt werden.

Als Strukturelemente, die mit einer Köderstelle zu versehen sind, werden als wichtig erachtet: Gebäude, Viehhaltung, Futterlager, Stapel (Holz, Baumaterial u. ä.), Altmaterialhaufen (Gerümpel), Stroh/Heu, Bodendecker (z. B. Gebüsch), Baue von Schadnagern. Besonders empfehlenswert ist die Berücksichtigung von: Viehhaltung, Futtersilo/-mischer, Stapel (Holz, Baumaterial u.ä.), Stroh/Heu. Mindestens mit Köder zu bestücken sind folgende Strukturelemente: Gebäude, Viehhaltung, Futterlager, Stapel, Altmaterialhaufen, Stroh/Heu. Darüber hinaus sollten bestückt werden: Bodendecker, Baue von Schadnagern.

Geeignet ist die Darstellung und Verteilung dieser Strukturelemente auf einer Lageskizze, die im einfachsten Fall von Hand gezeichnet wird. Besonders geeignet ist die Erstellung dieser Skizze mittels elektronischer Medien, die entsprechende Symbole vorgeben. Am besten geeignet ist ein interaktives Rechnerprogramm, das die Verteilung der Köderstellen unterstützt.

Alle Arten rodentizider Fraßköder können verwendet werden. Zu empfehlen sind solche, die auf Cerealien basieren, wie Haferflocken, Weizen, Mais u. a.. Besonders zu empfehlen sind pastöse Köder, die aus Cerealien oder Mehlen und Pflanzenfett bestehen. Am besten geeignet sind pastöse Köder in Packungen von 10 g bis 200 g, die ein Antikoagulant enthalten.

Als Wirkstoffe sind Fraßgifte, vorzugsweise Antikoagulantien aus der Gruppe der Indandionderivate oder der Hydroxycumarine, 1. und 2. Generation, geeignet. Diese Substanzen werden weltweit für die Bekämpfung von Nagetieren verwendet (vgl. beispielsweise DE 2506769; JP 48023942; CH 481580; Tammes et al. (1967): Acta Physiol. Pharmacol. 14 S. 423-433; Paposci (1974): Beihefte Z. Angew. Zool. S. 155 und DE 2506769). Als Beispiele für Antikoagulierende Substanzen seien die 4-Hydroxycumarinderivate (1-Phenyl-2-acetyl)-3-ethyl-4-hydroxycumarin ("Warfarine"), 3-(α-Acetonyl-4-chlorbenzyl)-4-hydroxycumarin ("Coumachlore"), [3-(4'-Hydroxy-3'-cumarinyl)-3-phenyl-1-(4'-brom-4'-biphenyl)-propan-1-ol ("Bromadiolone"), 3-(3'-Paradiphenylyl-1',2',3',4'-tetrahydro-1'-naphthyl)-4-hydroxycumarin ("Difenacoum") Brodifacoum, Flocoumafen und 3-(1',2',3',4'-Tetrahydro-1'-naphthyl)-4-hydroxycumarin ("Coumatetralyl"), die Indandionderivate, wie 1,1-Diphenyl-2-acetyl-indan-1,3-dion ("Diphacinone") und (1'-p-Chlorphenyl-1'-phenyl)-2-acetyl-indan-1,3-dion ("Chlorodiphacinone") und die Hydrocy-4-benzothiopyranone z.B. Difethialone genannt.

Als weitere Antikoagulantien, die zur Herstellung der erfindungsgemäßen Köder geeignet sind, seien die folgenden 2-Azacycloalkylmethyl substituierten Benzhydrylketone und -carbinole genannt: 1-Phenyl-3-(2-piperidyl)-1-(p-tolyl)-2-propanon, 3,3-Diphenyl-1-(2-pyrrolidinyl)-2-pentanon, 1,1-Diphenyl-3-[2-(hexahydro-1H-azepinyl)]-2-propanon, 1-(4-Fluorphenyl)-1-phenyl-3-(2-piperidyl)-2-propanon, 1-(4-Methylthiophenyl)-1-phenyl-3-(5,5-dimethyl-2-pyrrolidinyl)-2-propanon, 1-(p-Cumenyl)-1-phenyl-3-(4-tert.-butyl-2-piperidinyl)-2-propanon, 3,3-Diphenyl-1-[2-(hexahydro-1H-azepinyl]-2-butanon, 3-(2,4-Dichlorphenyl)-3-phenyl-1-(2-piperidyl)-2-heptanon, 1,1-Diphenyl-3-(5-methyl-2-pyrrolidinyl)-2-propanone, 3,3-Diphenyl-1-(2-piperidyl)-2-butanon, α-(α-Methyl-α-phenylbenzyl)-2-piperidinethanol, α-(α-Ethyl-α-phenylbenzyl)-2-pyrrolidinethanol, (2,5-Dimethyl-a-phenylbenzyl)-2-piperidin-ethanol und α-(Diphenylmethyl)-2-(hexahydro-1H-azepin)ethanol und ihre Salze, die in der DT-OS 2 417 783 beschrieben sind, sowie 4'-(Fluorphenyl)-2-(2-pyrrolidinyl)-acetophenon, 4'-Phenyl-2-(5,5-dimethyl-2-pyrrolidinyl)-acetophenon, 4'-[p-(Trifluormethyl)-phenyl]-2-(2-piperidyl)-acetophenon, 4'-(p-Butoxyphenyl)-2-(4-tert.-butyl-2-piperidyl)-acetophenon, 2'-Phenoxy-2-(2-piperidyl)-acetophenon, 4'-(p-Fluorphenoxy)-2-(5,5-dimethyl-2-pyrrolidinyl)-acetophenon, 4'-(p-Chlorphenoxy)-2-(2-piperidyl)-acetophenon, 4'-[m-(Trifluormethyl)-phenoxy]-2-(2-piperidyl)-acetophenon, 4'-(p-Butoxyphenoxy)-2-(2-pyrrolidinyl)-acetophenon, 2-(2-Piperidyl)-4'-(trans-p-tolylvinylen)-acetophenon, 2-(2-Hexahydro-1H-azepinyl)-4'-(trans-styryl)-acetophenon, 4'-(m-Methoxyphenylvinylen)-2-(2-pyrrolidinyl)-acetophenon, 2-(2-Piperidyl)-4'-[(p-methylthio)-phenylvinylen]-acetophenon, 4'-(3-Phenoxypropoxy)-2-(2-piperidyl)-acetophenon, 4'-(4-Phenylbutyl)-2-(2-piperidyl)-acetophenon, 4'-(α,α-Dimethylbenzyl)-2-(piperidyl)-acetophenon, 4'-Phenethyl-2-(3,5-diethyl-2-piperidyl)-acetophenon, 4'-Phenyl-2-(2-pyrrolidinyl)-acetophenon, α-[2-(2-Phenyl-ethoxy)phenyl]-2-piperidinethanol, α-(p-Phenoxyphenyl)-2-pyrrolidinethanol, α-[4-(4-Bromphenoxy)-phenyl]-6-methyl-2-piperidinethanol, α-(p-Phenethyl)-phenyl-2-pyrrolidinethanol, α-p-Bisphenyl-2-hexanhydro-1H-azepinethanol, α-[3-(4-Phenoxybutoxy)-phenyl]-2-piperidinethanol und α-(4-Benzyl)-phenyl-2-piperidinethanol und ihre Salze (vgl. DE-A- 2 418 480).

Die folgenden Seltenerdmetallsalze können ebenfalls als Antikoagulans verwendet werden: Dineodymdihydroxybenzoldisulfonat (Acta physiol. Acad. Sci. Hungar. 24, 373), Dineodym-3-sulfonato-pyridin-carboxylat-(4) und Cer-(III)-tris-(4-aminobenzolsulfonat).

Ferner können auch andere rodentizide Wirkstoffe im beschriebenen System verwendet werden, beispielsweise akut wirkende Rodentizide ("Akutgifte"), z.B. Alphachloralose, Alpha-Naphthylthioharnstoff, N-methyl-2,4-dinitro-N(2,4,6-tribromophenyl)-6-(trifluoromethyl)benzamin ("Bromethalin"), Vitamin D₂ und D₃ (Calciferol, Cholecalciferol), (2-chloro-4-dimethylamino-6-methylpyrimidin ("Crimidin"), 0,0-bis(p-chlorophenyl)acetimidoylphosphoramidothioate, Natrium-Mono-Fluoracetat, N-3-pyridylmethyl N'-p-nitrophenyl-Harnstoff ("Pyriminyl"), 3,4,5,-trimethoxybenzoyl-Methylreserpat ("Reserpine"), Thalliumsulphat, Zinkphosphid.

Zur näheren Erläuterung sei hier eine bevorzugte Ausführungsform des erfindungsgemäßen Verfahrens beschrieben:

### Beispiel

### 1. Durchführung des erfindungsgemäßen Verfahrens

### Vorbereitung:

- Genügend hochwertigen, frischen Köder bereitstellen.
- Lageplan des Betriebes mit allen Strukturelementen unter Verwendung der vorgegebenen Symbole jeweils für Außengelände/Erdgeschoss, für Obergeschosse der Gebäude und für Untergeschosse der Gebäude zeichnen. Auch kleine Ansammlungen von Altmaterial einzeichnen.
- Bekannte Rattenbaue einzeichnen.
- Hilfsmittel: Lageplan, Tabellenblatt, Stift, Köder, evtl. Köderkisten, für schüttfähigen Köder Becher oder kleine Schippe.

### Erstes Auslegen von Köder

- An jedem auf dem Lageplan eingezeichneten Symbol eine Köderstelle einrichten und auf dem Plan mit Nummer vermerken.
- Köder nur mit Handschuhen anfassen und auf trockenen, sauberen Grund legen, z. B. Unterteller.
- Pro Köderstelle 2 Pastenbeutel zu 100 g oder 2 Becher (ca. 200 g) verwenden.
- Köderstellen, Mengen und Datum in Tabelle eintragen.

### Nachlegen

- 2 mal wöchentlich alle Köderstellen kontrollieren.
- Köderstelle leer gefressen: Doppelte Menge auslegen (z. B. 4 Pastenbeutel). Keine Köderstelle leer lassen!
- Etwas gefressen: Auffüllen.
- Verunreinigten Köder ersetzen.
- An nicht angenommenen Stationen Ködermenge nach 2 Wochen reduzieren.
- Nachgelegte Mengen (z. B. Anzahl Päckchen) in der Tabelle notieren.

### Kontrolle/Erfolg/Ende

- Bekämpfung bis kein Köder mehr aufgenommen wird, maximal 2 Monate nach erstem Auslegen
- Erfolgskontrolle bei Restaktivität an den Köderstationen:

| Anzahl der Köderstationen | Anzahl Stationen mit Fraß am Ende der letzten Bekämpfungswoche | | |
|---|---|---|---|
| | Tilgung | Exzellenter Erfolg | Mäßiger Erfolg |
| Bis 10 | 0 | 1 | 2 |
| 11-20 | 0 | 2 | 4 |
| > 20 | 0 | 3-5 | 6-10 |

Ist nach 2 Monaten der Bekämpfungserfolg ungenügend, werden alle Köderstellen mit Fraßködem, die einen anderen Wirkstoff enthalten, bestückt.

### Dokumentation

Der Bekämpfungsverlauf wird zweimal wöchentlich dokumentiert. Die Tabellenblätter werden sorgfältig verwahrt. Sie dienen als Erinnerung für zukünftige Bekämpfungen und als Dokumente für den Tierarzt oder Behörden entsprechend gesetzlichen Bestimmungen und Seuchenverordnungen (SchweinehaltungshygVO, TierSeuchG etc.).

### 2. Ergebnisse

Auf 25 landwirtschaftlichen Betrieben wurde die Bekämpfung von Ratten durchgeführt.

Bei 18 Betrieben erfolgte eine Tilgung des Rattenbefalls. Diese Betriebe hatten am mindestens 81 % der vorgesehenen Strukturelemente Köderstellen eingerichtet.

Bei 7 Betrieben erfolgte keine Tilgung des Rattenbefalls. Diese Betriebe hatten lediglich an 51 % der vorgesehenen Strukturelemente Köderstellen eingerichtet.

Die Bekämpfung der Ratten erfolgte auf den 25 Betrieben unter ansonsten gleichen Bedingungen.

**Tab.1 Bekämpfungserfolg in Abhängigkeit vom Grad der Umsetzung des erfindungsgemäßen Verfahrens**

| vorgesehene Köderstellen eingerichtet | Zahl der landw. Betriebe | Bekämpfungserfolg |
|---|---|---|
| 81 % | 18 | = 100 % (vollst. Tilgung) |
| 51 % | 7 | < 95 % (keine Tilgung) |

**Tab. 2: Häufigkeit der verschiedenen Strukturelemente und deren Bestückung mit Köderplätzen in Prozent (% B) entsprechend Bekämpfungserfolg. Irrtumswahrscheinlichkeit P nach Mann-Whitney Test.**

| Bekämpfungserfolg | | **Gebäude** | | **Tierhaltung** | | **Futter** | | **Bodendecker** | | **Stapel** | | **Stroh/ Heu** | | **Altmaterial** | |
|---|---|---|---|---|---|---|---|---|---|---|---|---|---|---|---|
| | n | n | **%B** | n | **%B** | n | **%B** | n | **%B** | n | **%B** | n | **%B** | n | **%B** |
| **ja** | 18 | 116 | **76** | 49 | **86** | 60 | **78** | 10 | **100** | 19 | **95** | 23 | **83** | 29 | **90** |
| **nein** | 7 | 51 | **51** | 21 | **52** | 27 | **67** | 6 | **50** | 13 | **54** | 11 | **64** | 17 | **29** |
| | **P** | | ,029 | | ,448 | | ,108 | | ,230 | | ,073 | | ,270 | | ,023 |

### Erläuterung der Figuren:

- Fig. 1: zeigt die verwendeten Symbole für die verschiedenen Strukturelemente.
(a) Gebäude
(b) Viehhaltung
(c) Futterlager
(d) Stapel
(e) Altmaterialhaufen
(f) Stroh/Heu
(g) Bodendecker
(h) Gewässer
(i) Schadnagerbau
(k) Köderstelle mit Nummer
- Fig. 2: zeigt einen Lageplan eines landwirtschaftlichen Betriebes für Außengelände und Erdgeschoss mit eingezeichneten Strukturelementen und Köderstellen.
- Fig. 3: zeigt den zugehörigen Lageplan für das Obergeschoss mit eingezeichneten Strukturelementen und Köderstellen.

## Patentansprüche

1. Verfahren zur Bekämpfung von Schadnagern auf landwirtschaftlichen Betrieben,
**dadurch gekennzeichnet, dass**
(i) in einem ersten Schritt festgestellt wird, welches der folgenden Strukturelemente auf dem betreffenden Betrieb vorhanden ist
a) Gebäude
b) Viehhaltung
c) Futterlager
d) Stapel
e) Altmaterialhaufen
f) Stroh/Heu
g) Bodendecker
h) Baue von Schadnagern
und gegebenenfalls diese Strukturelemente auf einer Lageskizze des Betriebes dargestellt werden, beispielsweise in Form von Symbolen;
(ii) in einem zweiten Schritt jedem der so identifizierten Strukturelemente und nur diesen jeweils nur eine Köderstelle zugeordnet und mit rodentizidem Köder eingerichtet wird;
(iii) in einem dritten Schritt die Köderstellen regelmäßig kontrolliert und Köder die
a) zu mindestens 50 % gefressen sind durch die doppelte Ködermenge ersetzt,
b) zu weniger als 50 % gefressen sind durch die gleiche Ködermenge ersetzt,
c) unberührt sind nach 2 Wochen auf die halbe Menge reduziert,
d) verschmutzt oder anderweitig unbrauchbar sind durch neue Köder ersetzt.

2. Verfahren zur Bekämpfung von Schadnagern auf landwirtschaftlichen Betrieben gemäß Anspruch 1,
**dadurch gekennzeichnet, dass**
(i) in einem ersten Schritt festgestellt wird, welches der folgenden Strukturelemente auf dem betreffenden Betrieb vorhanden ist
a) Gebäude
b) Viehhaltung
c) Futterlager
d) Stapel
e) Altmaterialhaufen
f) Stroh/Heu
und gegebenenfalls diese Strukturelemente auf einer Lageskizze des Betriebes dargestellt werden, beispielsweise in Form von Symbolen;
(ii) in einem zweiten Schritt jedem der so identifizierten Strukturelemente und nur diesen jeweils nur eine Köderstelle zugeordnet und mit rodentizidem Köder eingerichtet wird;
(iii) in einem dritten Schritt die Köderstellen regelmäßig kontrolliert und Köder die
a) zu mindestens 50 % gefressen sind durch die doppelte Ködermenge ersetzt,
b) zu weniger als 50 % gefressen sind durch die gleiche Ködermenge ersetzt,
c) unberührt sind nach 2 Wochen auf die halbe Menge reduziert,
d) verschmutzt oder anderweitig unbrauchbar sind durch neue Köder ersetzt.

3. Verfahren gemäß einem der vorstehenden Ansprüche, wobei in den Köderstellen ein antikoagulanter Köder eingesetzt wird.

## Claims

1. Method of controlling harmful rodents on agricultural premises, which is
**characterized in that**
(i) in a first step information is gathered on which of the following structural elements exists at the premises in question:
a) buildings
b) animal keeping
c) feed stores
d) stacks
e) piles of old materials
f) straw/hay
g) ground-cover plants
h) holes inhabited by harmful rodents
and, if appropriate, these structural elements are marked on a positional sketch of the premises, for example in the form of symbols;
(ii) in a second step, in each case only one bait station is assigned to each of the structural elements identified thus and only to these and provided with rodenticidal bait;
(iii) in a third step, the bait stations are checked regularly, and
a) baits of which at least 50% have been eaten are replaced by twice the amount of bait,
b) baits of which less than 50% have been eaten are replaced by an identical amount of bait,
c) bait which has been left untouched is reduced to half the amount after 2 weeks,
d) baits which are soiled or otherwise unusable are replaced by fresh baits.

2. Method of controlling harmful rodents on agricultural premises according to Claim 1, which is **characterized in that**
(i) in a first step information is gathered on which of the following structural elements exists at the premises in question:
a) buildings
b) animal keeping
c) feed stores
d) stacks
e) piles of old materials
f) straw/hay
and, if appropriate, these structural elements are marked on a positional sketch of the premises, for example in the form of symbols;
(ii) in a second step, in each case only one bait station is assigned to each of the structural elements identified thus and only to these and provided with rodenticidal bait;
(iii) in a third step, the bait stations are checked regularly, and
a) baits of which at least 50% have been eaten are replaced by twice the amount of bait,
b) baits of which less than 50% have been eaten are replaced by an identical amount of bait,
c) bait which has been left untouched is reduced to half the amount after 2 weeks,
d) baits which are soiled or otherwise unusable are replaced by fresh baits.

3. Method according to one of the preceding claims, where an anticoagulant bait is employed at the bait stations.

## Revendications

1. Procédé pour lutter contre des rongeurs nuisibles dans des exploitations agricoles, **caractérisé en ce que**
(i) on établit dans une première étape ce qui est présent parmi les éléments structuraux suivants sur l'exploitation concernée
a) bâtiment
b) exploitation de bétail
c) magasin à fourrage
d) entrepôt
e) entassement de vieux matériaux
f) paille/foin
g) couverture de sol
h) gites de rongeurs nuisibles
et on représente éventuellement ces éléments structuraux sur un plan de situation de l'exploitation, par exemple sous forme de symboles ;
(ii) dans une deuxième étape, on attribue à chacun des éléments structuraux ainsi identifiés, et à eux seuls, un unique emplacement d'appâtage où l'on dispose un appât rodenticide ;
(iii) dans une troisième étape, on contrôle régulièrement les sites d'appâtage et
a) on remplace par la quantité double d'appât les appâts qui ont été dévorés à 50 % au moins,
b) on remplace par la même quantité d'appât les appâts qui ont été dévorés à moins de 50 %,
c) on réduit de moitié, au bout de deux semaines, les appâts qui n'ont pas été touchés,
d) on remplace par de nouveaux appâts ceux qui ont été souillés ou rendus inutilisables d'une autre façon.

2. Procédé pour lutter contre des rongeurs nuisibles dans des exploitations agricoles selon la revendication 1,
**caractérisé en ce que**
(i) on établit dans une première étape ce qui est présent parmi les éléments structuraux suivants sur l'exploitation concernée
a) bâtiment
b) exploitation de bétail
c) magasin à fourrage
d) entrepôt
e) entassement de vieux matériaux
f) paille/foin
et on représente éventuellement ces éléments structuraux sur un plan de situation de l'exploitation, par exemple sous forme de symboles ;
(ii) dans une deuxième étape, on attribue à chacun des éléments structuraux ainsi identifiés, et à eux seuls, un unique emplacement d'appâtage où on dispose un appât rodenticide ;
(iii) dans une troisième étape, on contrôle régulièrement les emplacements d'appâtage et
a) on remplace par la quantité double d'appât les appâts qui ont été dévorés à 50 % au moins,
b) on remplace par la même quantité d'appât les appâts qui ont été dévorés à moins de 50 %,
c) on réduit de moitié, au bout de deux semaines, la quantité des appâts qui n'ont pas été touchés,
d) on remplace par de nouveaux appâts ceux qui ont été souillés ou rendus inutilisables d'une autre façon.

3. Procédé selon l'une des revendications précédentes, dans lequel un appât anticoagulant est utilisé dans les emplacements d'appâtage.
